# EUROPÄISCHE PATENTANMELDUNG

(11) **EP 2 163 861 A1**
(43) Veröffentlichungstag der Anmeldung: **17.03.2010**
(21) Anmeldenummer: 08016134.2
(22) Anmeldetag: 12.09.2008
(51) Int. Cl.: G01D 18/00

(54) **Prozessmessgerät**

(71) Anmelder: Siemens Aktiengesellschaft, 80333 München (DE)
(72) Erfinder: Krause, Peter, 76187 Karlsruhe (DE); Ludwig, Michael, 76149 Karlsruhe (DE)

(57) **Zusammenfassung**

Ein zur Erkennung von Fehlfunktionen infolge von Hardware- und/oder Softwarefehlern ausgebildetes Prozessmessgerät
- mit einer Messeinheit (1) zur Umwandlung einer nichtelektrischen Größe (2) in eine elektrische Größe (3), umfassend eine die Umwandlung modulierende Modulationseinrichtung (4),
- mit einer Signalverarbeitungseinrichtung (7) zur Verarbeitung der elektrischen Größe (3) oder eines durch Signalvorverarbeitung (5) daraus gewonnenen elektrischen Rohsignals (6) mittels einer Signalverarbeitungssoftware (8) zu einem Messwert (9),
- mit Mitteln (28) zur Gewinnung eines der Modulation entsprechenden Testssignals (10),
- mit Mitteln in Form der Signalverarbeitungseinrichtung (7) zur Verarbeitung des Testsignals (10) mittels der Signalverarbeitungssoftware (8') zu einem Diagnosewert (11) und
- mit Mitteln (12) zur Überwachung der Signalverarbeitungseinrichtung (7) durch Vergleich des Diagnosewertes (11) mit einem Erwartungswert (13).

## Beschreibung

In der Prozessautomatisierung und Verfahrenstechnik kommt eine Vielzahl unterschiedlicher Prozessmessgeräte zur Messung von physikalischen oder chemischen Größen zum Einsatz. Solche Größen sind zum Beispiel Druck, Durchfluss, Temperatur, Konzentrationen bestimmter Gas- oder Flüssigkeitskomponenten in Gas- bzw. Flüssigkeitsgemischen, pH-Wert von Flüssigkeiten und viele mehr. Jedes Prozessmessgerät enthält eine Messeinheit, in der entsprechend einem geeigneten Messprinzip die jeweilige nichtelektrische Größe in eine elektrische Größe umgewandelt wird.

So wird bei einem Temperatursensor meistens die Temperaturabhängigkeit eines elektrischen Widerstands genutzt, um ein temperaturproportionales Spannungs- oder Stromsignal zu erzeugen.

Bei der Durchflussmessung einer elektrisch leitfähigen Flüssigkeit mittels eines magnetisch-induktiven Durchflussmessers wird die strömungsabhängige Ablenkung von Ladungsträgern der Flüssigkeit in einem Magnetfeld als elektrische Spannung zwischen zwei Messelektroden erfasst.

Da unterschiedliche Gase unterschiedliche spezifische Wärmeleitfähigkeiten aufweisen, lässt sich die Konzentration einer bestimmten Gaskomponente in einem Gasgemisch mittels eines Wärmeleitfähigkeitdetektors detektieren. Dabei wird die Abkühlung eines von dem Gasgemisch umströmten Heizfadens erfasst, wozu, wie bei einem Temperatursensor, dessen Widerstandsänderung gemessen wird.

Andere Gasanalysatoren, wie zum Beispiel Laserspektrometer oder nichtdispersive Infrarot (NDIR)-Gasanalysatoren, detektieren die wellenlängenspezifische Strahlungsabsorption in Gasen.

Bei einem paramagnetischen Sauerstoffsensor werden Sauerstoffmoleküle aufgrund ihres Paramagnetismus in einem inhomogenen Magnetfeld in Richtung höherer Feldstärke bewegt. Werden ein Messgas und ein Referenzgas mit unterschiedlichem Sauerstoffgehalt in einem solchen Magnetfeld zusammengeführt, so entsteht zwischen ihnen ein Druckunterschied, der detektiert wird.

Zur Unterdrückung von Störungen und Offset wird meistens die Umwandlung der nichtelektrischen Größe in die elektrische Größe moduliert, indem, um bei den oben genannten Beispielen zu bleiben, der Widerstand des Temperatursensors oder der Heizfaden des Wärmeleitfähigkeitsdetektors mit einer Wechselspannung gespeist werden, bei dem magnetisch-induktiven Durchflussmesser und dem paramagnetischen Sauerstoffsensor ein gepulstes oder wechselndes Magnetfeld erzeugt wird, bei dem Laserspektrometer der Laser moduliert wird und bei dem NDIR-Gasanalysator ein Blendenrad zur periodischen Strahlungsunterbrechung verwendet wird.

Je nach Art der aus der physikalischen oder chemischen Größe erzeugten elektrischen Größe wird diese unmittelbar oder nach einer Signalvorverarbeitung, wie Filtern und/oder Verstärken, als Rohsignal einer Signalverarbeitungseinrichtung zugeführt, die die elektrische Größe bzw. das Rohsignal mittels einer Signalverarbeitungssoftware zu einem Messwert verarbeitet. Messwert ist hier synonym mit Messwertfolge oder Messsignal zu verstehen; d. h. der Messwert ändert sich mit der erfassten nichtelektrischen Größe.

Aufgrund von Hardware- und/oder Softwarefehlern kann es bei der Signalverarbeitung zu fehlerhaften Messwerten kommen. Hardwarefehler können sporadisch auftreten, während Softwarefehler in der Regel systematischer Natur sind.

Der Erfindung liegt die Aufgabe zugrunde, Maßnahmen anzugeben, um derartige Fehler erkennen zu können.

Gemäß der Erfindung wird die Aufgabe durch das in Anspruch 1 angegebene Prozessmessgerät gelöst.

Vorteilhafte Weiterbildungen des erfindungsgemäßen Prozessmessgeräts sind den Unteransprüchen zu entnehmen.

Gegenstand der Erfindung ist somit ein Prozessmessgerät
- mit einer Messeinheit zur Umwandlung einer nichtelektrischen Größe in eine elektrische Größe, umfassend eine die Umwandlung modulierende Modulationseinrichtung,
- mit einer Signalverarbeitungseinrichtung zur Verarbeitung der elektrischen Größe oder eines durch Signalvorverarbeitung daraus gewonnenen elektrischen Rohsignals mittels einer Signalverarbeitungssoftware zu einem Messwert,
- mit Mitteln zur Gewinnung eines der Modulation entsprechenden Testssignals,
- mit Mitteln in Form der Signalverarbeitungseinrichtung zur Verarbeitung des Testsignals mittels der Signalverarbeitungssoftware zu einem Diagnosewert und
- mit Mitteln zur Überwachung der Signalverarbeitungseinrichtung durch Vergleich des Diagnosewertes mit einem Erwartungswert.

Das aus der Modulation bei der Umwandlung der nichtelektrischen Größe in die elektrische Größe gewonnene Testsignal hat gleich oder zumindest ähnliche Signaleigenschaften wie die zu verarbeitende elektrische Größe bzw. das Rohsignal, so dass eine höhere Testabdeckung erzielt wird, als dies bei einem von einem separaten Signalgenerator erzeugten Testsignal der Fall wäre. Da die Modulation vorgegeben und somit, anders als zum Beispiel das Rohsignal, das daraus abgeleitete Testsignal bekannt ist, kann für das Ergebnis (d. i. der oben erwähnte Diagnosewert) einer fehlerfreien Signalverarbeitung ein Erwartungswert vorgegeben oder beim Kalibrieren des Prozessmessgeräts ermittelt werden. Solange der Diagnosewert innerhalb eines Toleranzbereichs um den Erwartungswert liegt, kann die Signalverarbeitung als fehlerfrei angesehen werden. Im anderen Fall wird eine Fehler- oder Alarmmeldung erzeugt und beispielsweise der Messwert sicherheitsgerichtet eingestellt.

Es ist möglich, dass die Signalverarbeitungssoftware das Testsignal in Messpausen anstelle der elektrischen Größe oder des Rohsignals verarbeitet. Vorzugsweise ist die Signalverarbeitungssoftware in doppelter Ausführung vorhanden, so dass die elektrische Größe bzw. das Rohsignal und das Testsignal parallel verarbeitet werden können.

Für den Fall, dass es sich bei dem Prozessmessgerät bzw. seiner Messeinheit um einen nach dem Prinzip der Strahlungsabsorption arbeitenden Gasanalysator mit einer intensitäts- und/oder wellenlängenmodulierten Strahlungsquelle handelt, umfassen die Mittel zur Gewinnung des Testssignals einen die modulierte Strahlung erfassenden Monitordetektor oder stellen das Modulationssignal für die Strahlungsquelle als Testsignal bereit. In vielen Gasanalysatoren ist ein derartiger Monitordetektor bereits vorhanden, um die erzeugte Strahlungsintensität zu messen und Intensitätsminderungen durch Alterung der Strahlungsquelle oder Verschmutzungen zu detektieren. Bei dem Modulationssignal kann es sich beispielsweise um das Ansteuerungssignal einer Laserdiode handeln.

Bei einem NDIR-Gasanalysator mit strahlungsmodulierendem Blendenrad wird das Testssignal vorzugsweise mittels einer Lichtschranke erfasst, die in der Regel ohnehin zur Überwachung der Rotation des Blendenrads vorhanden ist.

Bei einem nach dem paramagnetischen Wechseldruckverfahren arbeitenden Gasanalysator oder einem magnetisch-induktiven Durchflussmesser, die jeweils einen ein Magnetfeld mit wechselnder Flussstärke erzeugenden Elektromagneten umfassen, wird das Testsignal bevorzugt von einem das Magnetfeld überwachenden Magnetfeldsensor geliefert oder es wird der Spulenstrom des Elektromagneten als Testsignal herangezogen.

Bei einem Temperatursensor oder einem Wärmeleitfähigkeitsdetektor (WLD) wird der temperaturabhängige Messwiderstand (der Heizfaden des WLDs) mit einem Wechselstrom oder gleichbedeutend einer Wechselspannung gespeist, wobei der Wechselstrom als Testsignal herangezogen wird.

Zur weiteren Erläuterung der Erfindung wird im Folgenden auf die Figuren der Zeichnung Bezug genommen; im Einzelnen zeigen jeweils beispielhaft:
- Figur 1: ein Blockschaltbild des erfindungsgemäßen Prozess-messgeräts,
- Figur 2: eine Messeinheit in Form eines NDIR-Gasanalysators,
- Figur 3: eine Messeinheit in Form eines nach dem paramagnetischen Wechseldruckverfahren arbeitenden Gasanalysators,
- Figur 4: eine Messeinheit in Form eines magnetisch-induktiven Durchflussmessers und
- Figur 5: eine Messeinheit 1 in Form eines Gasanalysators mit einer intensitäts- und/oder wellenlängenmodulierten Strahlungsquelle.

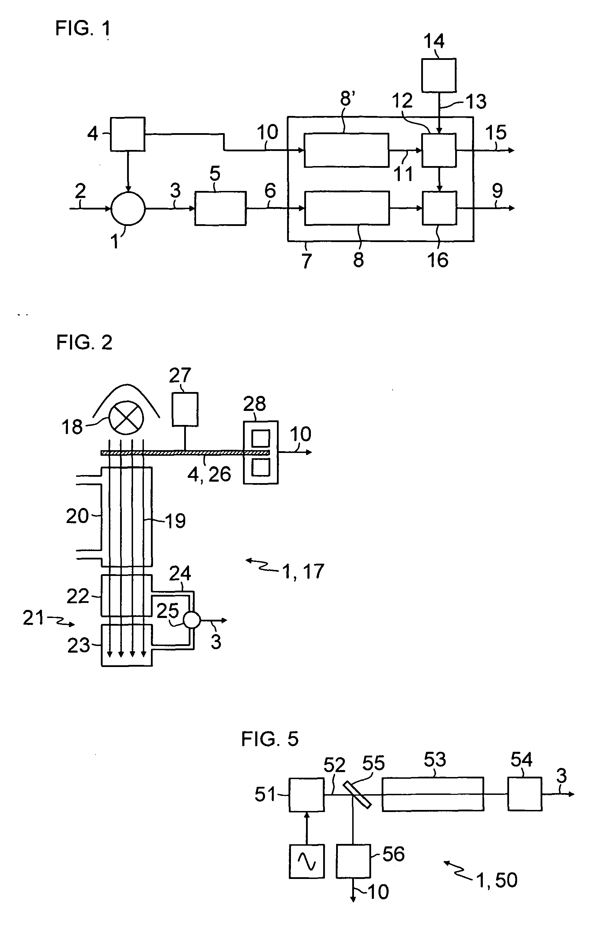

Das in Figur 1 gezeigte Prozessmessgerät weist eine Messeinheit 1 auf, die eine nichtelektrische, zum Beispiel physikalische oder chemische, Größe 2 in eine elektrische Größe 3 umwandelt. Die Umwandlung wird mittels einer auf die Messeinheit 1 einwirkenden Modulationseinrichtung 4 moduliert. Die Modulationseinrichtung 4 kann auch Bestandteil der Messeinheit 1 sein. In einer Einrichtung 5 wird aus der elektrischen Größe 3 durch Signalvorverarbeitung, wie zum Beispiel Filterung, Verstärkung oder Delta-Sigma-Modulation, ein Rohsignal 6 gewonnen. Je nach Art der elektrischen Größe 3 kann die Signalvorverarbeitung auch entfallen. Das Rohsignal 6 oder gegebenenfalls die elektrische Größe 3 wird in einer Signalverarbeitungseinrichtung 7 mittels einer Signalverarbeitungssoftware 8 zu einem Messwert 9 verarbeitet, der im Weiteren zur Anzeige gebracht oder an andere Geräte innerhalb eines Prozessautomatisierungssystems kommuniziert wird.

Aus der Modulation der Umwandlung der nichtelektrischen Größe 2 in die elektrische Größe 3 wird ein Testsignal 10 gewonnen, das ebenfalls der Signalverarbeitungseinrichtung 7 zugeführt wird und dort von derselben Signalverarbeitungssoftware zu einem Diagnosewert 11 verarbeitet wird. Dazu ist in dem gezeigten Beispiel die Signalverarbeitungssoftware in doppelter Ausführung 8, 8' vorhanden, so dass das Rohsignal 6 und das Testsignal 10 parallel verarbeitet werden. Anderenfalls verarbeitet die Signalverarbeitungssoftware 8 das Testsignal 10 in Messpausen anstelle des Rohsignals 6. Eine Vergleichseinrichtung 12 vergleicht den Diagnosewert 11 mit einem Erwartungswert 13, der in einem Speicher 14 abgelegt ist und zuvor berechnet oder bei einer Kalibrierung des intakten Prozessmessgeräts ermittelt worden ist. Weicht der Diagnosewert 11 um mehr als ein erlaubtes Maß von dem Erwartungswert 13 ab, wird eine Fehlermeldung 15 erzeugt und zum Beispiel mittels einer Einrichtung 16 der Messwert 9 auf einen sicherheitsgerichteten Wert festgesetzt.

Für das Testsignal 10 ist entscheidend, dass es aus der Modulation der Umwandlung der nichtelektrischen Größe 2 in die elektrische Größe 3 gewonnen wird und somit die gleichen oder zumindest ähnliche Signaleigenschaften wie die modulierte elektrische Größe 3 bzw. das Rohsignal 6 aufweist. Dadurch wird im Vergleich zur Erzeugung des Testsignals mittels eines Testsignalgenerators eine hohe Testabdeckung erreicht und eine zusätzliche Fehlerquelle vermieden.

Figur 2 zeigt beispielhaft eine Messeinheit 1 in Form eines NDIR-Gasanalysators 17. Dieser enthält eine Infrarot-Strahlungsquelle 18, deren Strahlung 19 in eine Messküvette 20 geleitet wird. Die Messküvette 20 enthält ein Gasgemisch mit einer zu detektierenden Gaskomponente. Hinter der Messküvette 20 ist ein opto-pneumatischer Detektor 21 angeordnet, der in bekannter Weise aus zwei hintereinander liegenden strahlungsdurchlässigen und mit der Gaskomponente gefüllten Kammern 22 und 23 besteht, die über eine Leitung 24 mit einem darin angeordneten und als Sensorsignal die elektrische Größe 3 erzeugenden druck- oder strömungsempfindlichen Sensor 25 verbunden sind.

Die Infrarot-Strahlung 19 wird mittels eines die Modulationseinrichtung 4 bildenden Blendenrads 26 moduliert, welches von einem Motor 27 angetrieben wird und den Strahlengang intermittierend unterbricht. Zur Überwachung der Rotation des Blendenrads 26 ist eine Lichtschranke 28 vorhanden, deren Überwachungssignal als das Testsignal 10 verwendet wird.

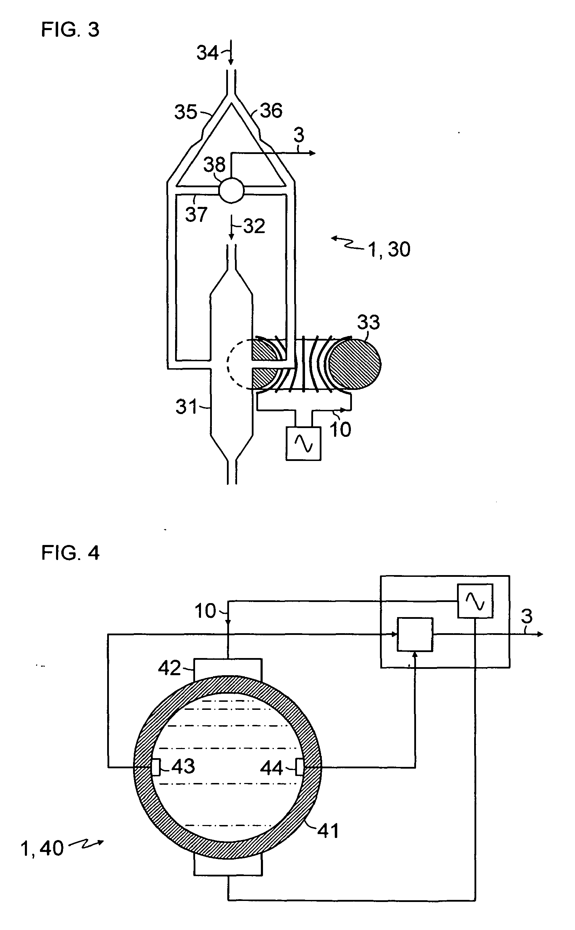

Figur 3 zeigt beispielhaft eine Messeinheit 1 in Form eines nach dem paramagnetischen Wechseldruckverfahren arbeitenden Gasanalysators 30. Die Messeinheit 1 weist eine Messkammer 31 auf, die von einem Messgas 32, dessen Sauerstoffanteil bestimmt werden soll, durchströmt wird. Ein Teil der Messkammer 31 liegt zwischen den Polschuhen eines wechselstromgespeisten Elektromagneten 33 in dem von ihm erzeugten Magnetfeld. Ein zur Erzielung des Messeffekts notwendiges Vergleichsgas 34 wird der Messkammer 31 durch zwei gleichförmige Kanäle 35 und 36 zugeführt, wobei einer der beiden Vergleichsgasströme im Bereich des Magnetfeldes mit dem Messgas 32 zusammentrifft. Da Sauerstoffmoleküle aufgrund ihrer paramagnetischen Eigenschaft in dem Magnetfeld in Richtung höherer Feldstärke bewegt werden, entsteht zwischen den Vergleichsgasströmen in den Kanälen 35 und 36 eine wechselnde Druckdifferenz. Diese bewirkt in einem Verbindungskanal 37 zwischen den beiden Kanälen 35 und 36 eine Strömung, die mittels eines Mikroströmungsfühlers 38 erfasst und in die elektrische Größe 1 umgewandelt wird.

Als das Testsignal 10 wird hier der Spulenstrom des Elektromagneten 33 verwendet. Alternativ kann das Testsignal mittels eines zur Überwachung des Elektromagneten 33 vorgesehenen Magnetfeldsensors erzeugt werden.

Figur 4 zeigt beispielhaft eine Messeinheit 1 in Form eines magnetisch-induktiven Durchflussmessers 40. Dieser weist ein insgesamt oder zumindest auf der Innenseite nichtleitendes Messrohr 41 auf, das von einem elektrisch leitfähigen Medium in Richtung der Messrohrachse durchflössen wird. Ein Elektromagnet 42 erzeugt zwischen zwei diametral angeordneten Polschuhen ein senkrecht zur Strömungsrichtung des Mediums ausgerichtetes gepulstes oder in der Richtung wechselndes Magnetfeld, unter dessen Einfluss in dem Medium befindliche Ladungsträger entsprechend ihrer Polarität zu der einen oder anderen von zwei im Messrohr 41 einander gegenüberliegenden Messelektroden 43 und 44 abwandern. Die sich zwischen den Messelektroden 43 und 44 aufbauende elektrische Spannung ist proportional zu der über den Querschnitt des Messrohres 41 gemittelten Strömungsgeschwindigkeit des Mediums und bildet die elektrische Größe 3.

Auch hier wird als das Testsignal 10 der Spulenstrom des Elektromagneten 42 verwendet. Alternativ kann das Testsignal mittels eines zur Überwachung der Elektromagneten 42 vorgesehenen Magnetfeldsensors erzeugt werden.

Figur 5 zeigt schließlich beispielhaft eine Messeinheit 1 in Form eines Gasanalysators 50 mit einer intensitäts- und/oder wellenlängenmodulierten Strahlungsquelle 51. Die erzeugte Strahlung 52 trifft nach Durchlaufen einen mit einem Messgas gefüllten Messküvette 53 auf einen Messdetektor 54, dessen Ausgangssignal die elektrische Größe 3 bildet.

Zur Überwachung der Strahlungsquelle 51 wird mittels eines Strahlteilers 55 ein Teil der erzeugten Strahlung 52 auf einen Monitordetektor 56 gelenkt, dessen Monitorsignal hier als Testsignal 10 herangezogen wird. Alternativ kann auch das die Strahlungsquelle 51 modulierende Ansteuerungssignal als Testsignal 10 verwendet werden.

## Patentansprüche

1. Prozessmessgerät
- mit einer Messeinheit (1) zur Umwandlung einer nichtelektrischen Größe (2) in eine elektrische Größe (3), umfassend eine die Umwandlung modulierende Modulationseinrichtung (4),
- mit einer Signalverarbeitungseinrichtung (7) zur Verarbeitung der elektrischen Größe (3) oder eines durch Signalvorverarbeitung (5) daraus gewonnenen elektrischen Rohsignals (6) mittels einer Signalverarbeitungssoftware (8) zu einem Messwert (9),
- mit Mitteln (28) zur Gewinnung eines der Modulation entsprechenden Testssignals (10),
- mit Mitteln in Form der Signalverarbeitungseinrichtung (7) zur Verarbeitung des Testsignals (10) mittels der Signalverarbeitungssoftware (8') zu einem Diagnosewert (11) und
- mit Mitteln (12) zur Überwachung der Signalverarbeitungseinrichtung (7) durch Vergleich des Diagnosewertes (11) mit einem Erwartungswert (13).

2. Prozessmessgerät nach Anspruch 1, **dadurch gekennzeichnet, dass** die Signalverarbeitungssoftware (8) zeitweise das Testsignal (10) anstelle der elektrischen Größe (3) oder des Rohsignals (6) verarbeitet.

3. Prozessmessgerät nach Anspruch 1, **dadurch gekennzeichnet, dass** die Signalverarbeitungssoftware (8) in doppelter Ausführung (8. 8') vorhanden ist und die elektrische Größe (3) oder das Rohsignal (6) und das Testsignal (10) parallel verarbeitet.

4. Prozessmessgerät nach einem der vorangehenden Ansprüche, **dadurch gekennzeichnet, dass** die Messeinheit (1) einen nach dem Prinzip der Strahlungsabsorption arbeitenden Gasanalysator (50) mit einer intensitäts- und/oder wellenlängenmodulierten Strahlungsquelle (51) umfasst und die Mittel zur Gewinnung des Testssignals (10) einen die modulierte Strahlung erfassenden Monitordetektor (56) umfassen oder das Modulationssignal für die Strahlungsquelle (51) als Testsignal (10) bereitstellen.

5. Prozessmessgerät nach einem der Ansprüche 1 bis 3, **dadurch gekennzeichnet, dass** die Messeinheit (1) einen nichtdispersiven Infrarot (NDIR)-Gasanalysator (17) mit einem strahlungsmodulierenden Blendenrad (26) umfasst und die Mittel zur Gewinnung des Testssignals (10) eine die Rotation des Blendenrads (26) überwachende Lichtschranke (28) umfassen.

6. Prozessmessgerät nach einem der Ansprüche 1 bis 3, **dadurch gekennzeichnet, dass** die Messeinheit (1) einen nach dem paramagnetischen Wechseldruckverfahren arbeitenden Gasanalysator (30) mit einem ein Magnetfeld mit wechselnder Flussstärke erzeugenden Elektromagneten (33) umfasst und die Mittel zur Gewinnung des Testssignals (10) einen das erzeugte Magnetfeld überwachenden Magnetfeldsensor umfassen oder den Spulenstrom des Elektromagneten (33) als das Testsignal (10) bereitstellen.

7. Prozessmessgerät nach einem der Ansprüche 1 bis 3, **dadurch gekennzeichnet, dass** die Messeinheit (1) einen magnetisch-induktiven Durchflussmesser (40) mit einem ein Magnetfeld mit wechselnder Flussstärke erzeugenden Elektromagneten (42) umfasst und die Mittel zur Gewinnung des Testssignals (10) einen das erzeugte Magnetfeld überwachenden Magnetfeldsensor umfassen oder den Spulenstrom des Elektromagneten (42) als das Testsignal (10) bereitstellen.

8. Prozessmessgerät nach einem der Ansprüche 1 bis 3, **dadurch gekennzeichnet, dass** die Messeinheit (1) einen mit einem Wechselstrom gespeisten temperaturabhängigen Messwiderstand enthält und die Mittel zur Gewinnung des Testssignals den Wechselstrom als das Testsignal (10) bereitstellen.
